(19) Europäisches Patentamt
European Patent Office
Office européen des brevets

(11) Veröffentlichungsnummer : **0 010 522**
**B1**

(12) # EUROPÄISCHE PATENTSCHRIFT

(45) Veröffentlichungstag der Patentschrift : **11.08.82**

(51) Int. Cl.$^3$ : **C 08 G 69/26**, C 08 G 69/28

(21) Anmeldenummer : **79810127.5**

(22) Anmeldetag : **12.10.79**

(54) **Transparente Copolyamide, Verfahren zu deren Herstellung und deren Verwendung zur Herstellung von Formkörpern.**

(30) Priorität : **18.10.78 CH 10773/78**

(43) Veröffentlichungstag der Anmeldung : **30.04.80 (Patentblatt 80/09)**

(45) Bekanntmachung des Hinweises auf die Patenterteilung : **11.08.82 Patentblatt 82/32**

(84) Benannte Vertragsstaaten : **CH DE FR GB IT NL**

(56) Entgegenhaltungen :
**CH A 498 893**
**DE A 2 715 860**
**FR A 2 324 672**
**GB A 1 410 007**

(73) Patentinhaber : **CIBA-GEIGY AG**
**Patentabteilung Postfach**
**CH-4002 Basel (CH)**

(72) Erfinder : **Pfeifer, Josef, Dr.**
**Brunnmattstrasse 32**
**CH-4106 Therwil (CH)**

**EP 0 010 522 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Transparente Copolyamide, Verfahren zu deren Herstellung und deren Verwendung zur Herstellung von Formkörpern

Gegenstand vorliegender Erfindung sind neue, transparente Copolyamide, Verfahren zu deren Herstellung sowie deren Verwendung zur Herstellung von Formkörpern.

In der U.S. Patentschrift 3.597.400 sind transparente Copolyamide aus 4,4'-Diaminodicyclohexylmethan, Hexamethylendiamin, Isophthalsäure und Terephthalsäure beschrieben. Diese Copolyamide nehmen sehr viel Wasser auf und ihre Glasumwandlungstemperaturen sinken nach Wasserlagerung beträchtlich ab. Die U.S. Patentschrift 2.696.482 beschreibt transparente Polyamide aus 4,4'-Diaminodicyclohexylmethan und Isophthalsäure. Diese Polyamide weisen eine sehr hohe Schmelzviskosität und eine hohe Wasseraufnahme auf und lassen sich nur schwer in der Schmelze kondensieren oder aus der Schmelze verarbeiten. Will man mit diesen Systemen Copolyamide mit hohen Glasumwandlungstemperaturen erreichen, so erhält man spröde Produkte mit relativ hoher Wasseraufnahme.

Ferner offenbaren sowohl die DE-OS 2 642 244 als auch die CH-A-498 893 Lehren zur Herstellung von transparenten, kochbeständigen Copolyamiden. Diese Lehren führen jedoch in entgegengesetzte Richtungen. Einerseits offenbart die CH-A-498 893 Poly- und Copolyamide aus aromatischen Dicarbonsäuren und gegebenenfalls Caprolactam und aus einem mindestens einmal endverzweigten aliphatischen Diamin. Die Kette des Diamins, welche mit einem Phenylenring unterbrochen sein kann, enthält 3-12 C-Atome. Anderseits lehrt die DE-OS 2 642 244, dass man zu Copolyamiden mit den erwähnten Eigenschaften gelangt, wenn man aromatische Dicarbonsäuren mit einem 4,4'-Diaminodicyclohexylalkan, einem aliphatischen Diamin mit mindestens 6 C-Atomen, sowie einer langkettigen aliphatischen Carbonsäure in Form von Aminosäure bzw. ihrem Lactam mit mehr als 9 Methylengruppen oder in Form von Dicarbonsäure mit mindestens 6 Methylengruppen zur Reaktion bringt. Das aliphatische Diamin kann dabei verzweigt oder unverzweigt sein.

Es war daher nicht vorauszusehen, dass man durch Umsetzung von aromatischen Dicarbonsäuren, die frei von aliphatischen Anteilen sind, mit einem cycloaliphatischen Diamin und einem langkettigen endverzweigten aliphatischen Diamin zu den transparenten kochbeständigen Copolyamiden der vorliegenden Erfindung gelangt, die von den zuvor genannten Nachteilen frei sind.

Die neuen erfindungsgemässen Copolyamide weisen eine reduzierte spezifische Viskosität (im folgenden auch reduzierte Lösungsviskosität genannt) von mindestens 0,5 und bevorzugt von 0,7 bis etwa 1,8 und insbesondere von etwa 0,8 bis etwa 1,3 dl/g, gemessen an einer 0,5 %igen Lösung in m-Kresol bei 25 °C, auf und bestehen aus wiederkehrenden Strukturelementen der Formel I

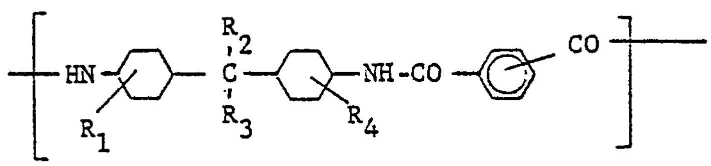

(I)

und II

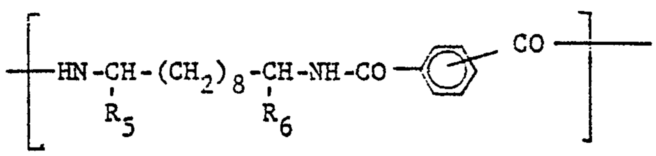

(II)

worin die Carbonylgruppen in 50-85 % der Summe aller Strukturelemente der Formel I und II in 1,4-Stellung und in 50-15 % der Summe aller Strukturelemente der Formel I und II in 1,3-Stellung an den Benzolkern gebunden sind,

$R_1$ bis $R_4$ unabhängig voneinander Wasserstoff oder Alkyl mit 1-4 C-Atomen,

$R_5$ und $R_6$ unabhängig voneinander Aethyl, n-Propyl, Isobutyl, $-CH(R_7)(R_8)$ oder $-CH_2CH(R_9)(R_{10})$,

$R_7$ Alkyl mit 1-8 C-Atomen,

$R_8$ Alkyl mit 1-4 C-Atomen,

$R_9$ Wasserstoff oder Alkyl mit 1-4 C-Atomen und

$R_{10}$ Alkyl mit 2-8 C-Atomen bedeuten,

wobei, wenn $R_5$ und $R_6$ unabhängig voneinander Aethyl, n-Propyl, Isobutyl oder $-CH(R_7)(R_8)$ darstellen, der Anteil an Strukturelementen der Formel I 10-40 Gew.%, bezogen auf das Gesamtgewicht des Polymeren, beträgt, und, wenn $R_5$ und $R_6$ unabhängig voneinander eine Gruppe $-CH_2CH(R_9)(R_{10})$ bedeuten, der Anteil an Strukturelementen der Formel I 35-55 Gew.%, bezogen auf das Gesamtgewicht des Polymeren, beträgt.

Die erfindungsgemässen Copolyamide zeichnen sich durch hohe Glasumwandlungstemperaturen und dementsprechend hohe Wärmeformbeständigkeit, gute thermoplastische Verarbeitbarkeit, geringe Wasseraufnahme verbunden mit verminderter Abhängigkeit der mechanischen und elektrischen Eigenschaften von der Umgebungsfeuchtigkeit und verbesserte Hydrolysebeständigkeit aus. Die neuen Copolyamide behalten auch in wassergesättigtem Zustand hohe Erweichungstemperaturen bei und sind beständig gegen kochendes Wasser.

Durch $R_1$ bis $R_4$ und $R_7$ bis $R_{10}$ dargestellte Alkylgruppen können geradkettig oder verzweigt sein, sind aber bevorzugt geradkettig. Beispiele derartiger Alkylgruppen sind: die Methyl-, Aethyl-, n-Propyl-, Isopropyl-, n- und sek-Butyl-, n-Pentyl-, n-Hexyl-, n-Heptyl- und n-Octyl-gruppe.

Alkylgruppen $R_1$ bis $R_4$ weisen bevorzugt 1 oder 2 C-Atome auf. Besonders bevorzugt stellen $R_2$ und $R_3$ je Wasserstoff dar und $R_1$ und $R_4$ bedeuten je Methyl.

Alkylgruppen $R_7$ weisen mit Vorteil 1-5 C-Atome auf, während als Alkylgruppen $R_8$ solche mit 1-3 C-Atomen bevorzugt werden. Bevorzugte Bedeutungen von $R_9$ sind Methyl und insbesondere Wasserstoff. Alkylgruppen $R_{10}$ weisen mit Vorteil 4-6 C-Atome auf.

Bevorzugt sind definitionsgemässe Copolyamide, worin $R_1$ bis $R_4$ unabhängig voneinander Wasserstoff oder Methyl, $R_5$ und $R_6$ je Aethyl, n-Propyl, Isobutyl oder eine Gruppe $-CH(R_7)(R_8)$ bedeuten und $R_7$ und $R_8$ die unter Formel I bzw. II angegebene Bedeutung haben, der Anteil an Strukturelementen der Formel I 15-32 Gew.%, bezogen auf das Gesamtgewicht des Polymeren, beträgt und der Anteil an Isophthalsäurekomponenten im Polymeren, in Mol.%, im wesentlichen demjenigen der Diaminkomponenten der Formel

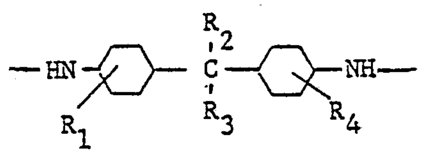

d.h. der cycloaliphatischen Diaminkomponenten, entspricht. Insbesondere sind Copolyamide der vorerwähnten Art bevorzugt, worin $R_1$ und $R_4$ je Methyl, $R_2$ und $R_3$ je Wasserstoff, $R_5$ und $R_6$ je Aethyl, n-Propyl, Isobutyl oder eine Gruppe $-CH(R_7)(R_8)$, $R_7$ Alkyl mit 1-5 C-Atomen und $R_8$ Alkyl mit 1-3 C-Atomen bedeuten und der Anteil an Strukturelementen der Formel I 20-30 Gew.%, bezogen auf das Gesamtgewicht des Polymeren, beträgt. Dabei entspricht der Anteil an Isophthalsäurekomponenten, in Mol.%, im wesentlichen demjenigen der cycloaliphatischen Diaminkomponenten.

Ferner werden definitionsgemässe Copolyamide bevorzugt, worin $R_1$ bis $R_4$ unabhängig voneinander Wasserstoff oder Methyl und $R_5$ und $R_6$ je eine Gruppe $-CH_2CH(R_9)(R_{10})$ bedeuten, worin $R_9$ und $R_{10}$ die unter Formel I bzw. II angegebene Bedeutung haben, der Anteil an Strukturelementen der Formel I 38-52 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht, insbesondere Copolyamide der vorerwähnten Art, worin $R_1$ und $R_4$ je Methyl, $R_2$ und $R_3$ je Wasserstoff, $R_9$ Wasserstoff und $R_{10}$ Alkyl mit 4-6 C-Atomen bedeuten und der Anteil an Strukturelementen der Formel I 40-50 Gew.%, bezogen auf das Gesamtgewicht des Polymeren, beträgt. Dabei entspricht der Anteil an Isophthalsäurekomponenten im Polymeren, in Mol.%, im wesentlichen demjenigen der cycloaliphatischen Diaminkomponenten.

Besonders bevorzugt sind transparente Copolyamide, die aus wiederkehrenden Strukturelementen der Formel Ia

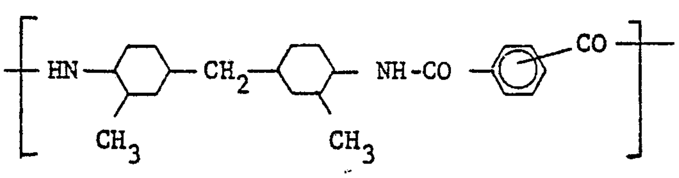

(Ia)

und IIa

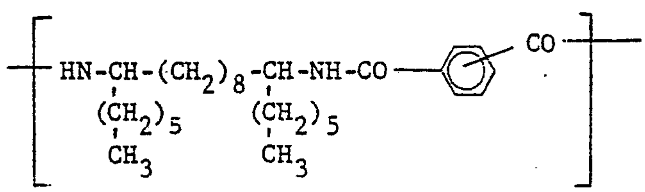

(IIa)

bestehen, worin der Anteil an Strukturelementen der Formel Ia 45-50 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

Bevorzugt sind ferner Copolyamide, welche aus den wiederkehrenden Strukturelementen der Formeln Ia und IIb

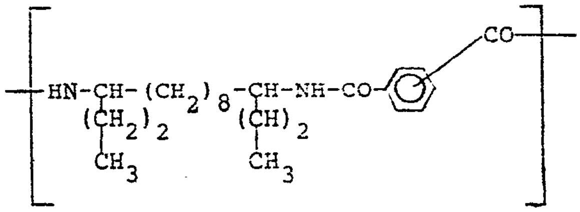

(IIb)

bestehen, worin der Anteil an Strukturelementen der Formel Ia 25-30 Gew.-%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

Die erfindungsgemässen Copolyamide können dadurch hergestellt werden, dass man entweder

A) 10-40 Gew.% eines Gemisches aus im wesentlichen stöchiometrischen Mengen Isophthalsäure oder Terephthalsäure oder Gemischen bzw. amidbildenden Derivaten davon und einem Diamin der Formel III

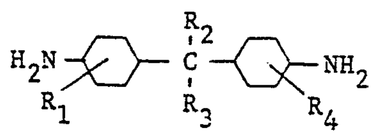

(III)

mit 90-60 Gew.% eines Gemisches aus im wesentlichen stöchiometrischen Mengen Isophthalsäure oder Terephthalsäure oder Gemischen bzw. amidbildenden Derivaten davon und einem Diamin der Formel IVa

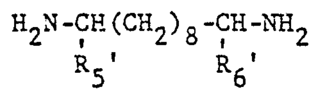

(IVa)

oder

B) 35-55 Gewichtsprozent eines Gemisches aus im wesentlichen stöchiometrischen Mengen Isophthalsäure oder Terephthalsäure oder Gemischen bzw. amidbildenden Derivaten davon und einem Diamin der Formel III mit 65-45 Gewichtsprozent eines Gemisches aus im wesentlichen stöchiometrischen Mengen Isophthalsäure oder Terephthalsäure oder Gemischen bzw. amidbildenden Derivaten davon und einem Diamin der Formel IVb

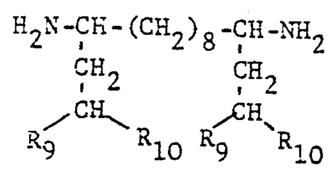

(IVb)

umsetzt, wobei $R_5'$ und $R_6'$ unabhängig voneinander Aethyl, n-Propyl, Isobutyl oder $—CH(R_7)(R_8)$ bedeuten und $R_1$ bis $R_4$ sowie $R_7$ bis $R_{10}$ die unter Formel I bzw. II angegebene Bedeutung haben, der Anteil an Terephthalsäure bzw. einem amidbildenden Derivat davon an der Gesamtmenge der Dicarbonsäuren 50-85 Gew.% und der Anteil an Isophthalsäure bzw. einem amidbildenden Derivat davon an der Gesamtmenge der Dicarbonsäuren 50-15 Gew.% betragen und sich diese Gewichtsprozente bei amidbildenden Derivaten der Terephthalsäure oder Isophthalsäure auf gleiche funktionelle Gruppen beziehen.

Als amidbildende Derivate der Terephthalsäure oder Isophthalsäure können beispielsweise die entsprechenden Dihalogenide, vor allem die Dichloride, Dinitrile, Dialkyl- oder Diarylester, besonders Dialkylester mit je 1-4 C-Atomen in den Alkylteilen und Diphenylester, verwendet werden.

Die Umsetzung der definitionsgemässen Reaktionskomponenten kann nach an sich bekannten Methoden vorgenommen werden. Bevorzugt ist die Herstellung nach dem Schmelzpolykondensationsverfahren in mehreren Stufen. Dabei werden die Diamine mit im wesentlichen stöchiometrischen Mengen Dicarbonsäuren in einem abgeschlossenen Gefäss, gegebenenfalls unter Zusatz von Wasser, unter Inertgas bei Temperaturen zwischen etwa 240 und 290 °C vorkondensiert. Bevorzugt setzt man die Diamine und Dicarbonsäuren als Salze ein ; insbesondere ist es vorteilhaft, die Terephthalsäure in Form des Salzes einzusetzen, da sich die freie Säure nur langsam in Verlaufe der Vorkondensation auflöst und zu verlängerten Reaktionszeiten führt. Bei Isophthalsäure besteht diese Schwierigkeit nicht, sodass sie

ohne weiteres als solche, d.h. ohne Salzbildung, eingesetzt werden kann. Bevorzugt setzt man die Diamine der Formel IVa oder IVb und Terephthalsäure als Salze ein, während man das Diamin der Formel III und die Isophthalsäure in freier Form verwendet. Die für die Vorkondensation einzusetzenden Salze werden aus im wesentlichen stöchiometrischen Mengen Terephthalsäure und Diamin der Formel IVa oder IVb in einem geeigneten inerten organischen Lösungsmittel hergestellt. Als inerte organische Lösungsmittel eignen sich dabei z.B. cycloaliphatische Alkohole, wie Cyclopentanol und Cyclohexanol, und vor allem aliphatische Alkohole mit bis zu 6 C-Atomen, wie Methanol, Aethanol, n-Propanol, Butanole, Pentanole und Hexanole, sowie Gemische derartiger Lösungsmittel mit Wasser. Das Vorkondensat kann anschliessend bei Temperaturen zwischen etwa 260 und 300 °C bei Normaldruck und in Inertgasatmosphäre bis zur Bildung der erfindungsgemässen Copolyamide weiterkondensiert werden. Unter Umständen kann es von Vorteil sein, nach Beendigung der Polykondensation Vakuum anzulegen, um das Polyamid zu entgasen.

Die erfindungsgemässen Copolyamide können auch durch Schmelz- oder Lösungsmittelpolykondensation von Diaminen der Formel III, IVa oder IVb mit im wesentlichen stöchiometrischen Mengen eines aktivierten Esters der Iso- bzw. Terephthalsäure hergestellt werden. Als aktivierte Ester eignen sich insbesondere die entsprechenden Diphenylester. Die Reaktionstemperaturen liegen dabei im allgemeinen zwischen etwa 230 und 300 °C.

Die Diamine der Formel III sind bekannt. Die Diamine der Formeln IVa und IVb sind bekannt oder können z.B. dadurch hergestellt werden, dass man in 3,12-Stellung entsprechend substituierte 1,2-Diaza-1,5,9-cyclododecatriene oder 1,2-Diaza-cyclododecene in Gegenwart eines inerten organischen Lösungsmittels katalytisch hydriert [vgl. deutsche Offenlegungsschrift 2.549.403].

Die erfindungsgemässen Copolyamide haben ein glasklares Aussehen und hohe Glasumwandlungstemperaturen, lassen sich aber trotzdem sehr gut thermoplastisch verarbeiten, z.B. nach dem Spritzguss- oder Extrusionsverfahren. Sie zeichnen sich ferner durch geringe Wasseraufnahme, gute Hydrolysebeständigkeit, Beständigkeit gegen kochendes Wasser und geringe Beeinflussung der mechanischen und elektrischen Eigenschaften unter Feuchtigkeitseinwirkung.

Die erfindungsgemässen Copolyamide können nach an sich bekannten Methoden zu transparenten Formkörpern verschiedenster Art verarbeitet werden, wie transparenten Geräten und Geräteteilen.

## Beispiele 1-16

a) Die in diesen Beispielen verwendeten Diamine der Formeln IVa oder IVb können nach dem in der deutschen Offenlegungsschrift 25 49 403 beschriebenen Verfahren durch katalytische Hydrierung von in 3,12-Stellung entsprechend substituierten 1,2-Diaza-1,5,9-cyclododecatrienen oder 1,2-Diaza-cyclododecanen erhalten werden :

1,10-Diamino-1,10-diäthyldecan durch katalytische Hydrierung von 3,12-Diäthyl-1,2-diaza-1,5,9-cyclododecatrien ; farbloses Oel [Kp. 83-85 °C/0,7 Pa ; $n_D^{20}$=1,457 5].

1,10-Diamino-1,10-di-n-propyldecan durch katalytische Hydrierung von 3,12-Di-n-propyl-1,2-diaza-1,5,9-cyclododecatrien (Diastereomerengemisch) ; farbloses Oel [Kp. 132-135 °C/1,3 Pa ; $n_D^{20}$=1,459 0 ; IR (flüssig) u.a. Banden bei 3 278 und 1 613 $cm^{-1}$].

1,10-Diamino-1,10-diisopropyldecan durch katalytische Hydrierung von 3,12-Diisopropyl-1,2-diaza-1,5,9-cyclododecatrien (Diastereomerengemisch) ; farbloses Oel [Kp. 106-109 °C/1,3 Pa ; $n_D^{20}$=1,460 0 ; IR (flüssig) u.a. Banden bei 3 355, 3 278, 1 613 $cm^{-1}$].

1,10-Diamino-1,10-diisobutyldecan durch katalytische Hydrierung von 3,12-Diisobutyl-1,2-diaza-1,5,9-cyclododecatrien (Diastereomerengemisch) ; farbloses Oel [Kp. 168-172 °C/5 Pa ; $n_D^{20}$=1,456 1 ; IR (flüssig) u.a. Banden bei 3 289, 3 205, 1 600 $cm^{-1}$].

1,10-Diamino-1,10-di-n-hexyldecan durch katalytische Hydrierung von 3,12-Dihexyl-1,2-diazacyclododecen (Diastereomerengemisch) ; farbloses Oel [Kp. 184 °C/2,6 bis 0,7 Pa ; $n_D^{20}$=1,462 4 ; IR (flüssig) u.a. Banden bei 3 355, 3 278, 1 613 $cm^{-1}$].

1,10-Diamino-1,10-di-(3-pentyl)-decan durch katalytische Hydrierung von 3,12-Di-(3-pentyl)-1,2-diazacyclododecen ; farbloses Oel [Kp. 141-143 °C/0,5 Pa ; $n_D^{20}$=1,466 6 ; IR (flüssig) u.a. Banden bei 3 378, 3 278, 1 613 $cm^{-1}$].

1,10-Diamino-1,10-di-(2-butyl) decan durch katalytische Hydrierung von 3,12-Di-(2-butyl)-1,2-diaza-1,5,9-cyclododecatrien (Diastereomerengemisch) ; farbloses Oel [Kp. 143-145 °C/7 Pa ; $n_D^{20}$=1,463 9 ; IR (flüssig) u.a. Banden bei 3 330, 1 626 $cm^{-1}$].

1,10-Diamino-1,10-di-(3-heptyl)-decan durch katalytische Hydrierung von 3,12-Di-(3-heptyl)-1,2-diaza-cyclododecen (Diastereomerengemisch) ; farbloses Oel [Kp. 170 °C/1,3 Pa ; $n_D^{20}$=1,466 2 ; IR (flüssig) u.a. Banden bei 3 278, 1 613 $cm^{-1}$].

Die Herstellung der 1,2-Diaza-1,5,9-cyclododecatriene bzw. 1,2-Diazacyclododecene kann nach den in den deutschen Offenlegungsschriften 23 30 087 und 25 49 404 beschriebenen Methoden vorgenommen werden.

b) Herstellung von Salzen aus Terephthalsäure und verschiedenen Diaminen der Formel IVa und IVb

In einem Rundkolben, der mit Rührer, Rückflusskühler und Tropftrichter versehen ist, werden 0,1 Mol

Terephthalsäure in 500 ml eines Aethanol-Wasser-Gemisches (75 Vol. teile Aethanol und 25 Vol. teile Wasser) zum Sieden erwärmt. In die kochende Suspension lässt man aus dem Tropftrichter im Verlaufe von ca. 10 Minuten 0,1 Mol Diamin einfliessen und spült dann die Diaminreste im Tropftrichter mit etwas Aethanol quantitativ in den Kolben hinein. Nach 4 Stunden Rühren unter Rückfluss kühlt man die Suspension auf Raumtemperatur ab (20-25 °C), filtriert das entstandene Salz ab und trocknet es im Wasserstrahlvakuum bei 90 °C.

Nach dieser Methode werden die Salze aus Terephthalsäure und folgenden Diaminen hergestellt :

| Diamin | Ausbeute (% d.Th.) | Bezeichnung |
|---|---|---|
| 1,10-Diamino-1,10-diäthyldecan | 97 | Salz A |
| 1,10-Diamino-1,10-di-n-propyldecan | 91 | Salz B |
| 1,10-Diamino-1,10-diisopropyldecan | 85 | Salz C |
| 1,10-Diamino-1,10-diisobutyldecan | 99 | Salz D |
| 1,10-Diamino-1,10-di-n-hexyldecan | 98 | Salz E |
| 1,10-Diamino-1,10-di-(3-pentyl)-decan | 96 | Salz F |
| 1,10-Diamino-1,10-di-(2-butyl)-decan | 97 | Salz G. |

c) In ein Bombenrohr, welches mit einem Schraubdeckel mit eingebautem Ueberdruckventil ausgestattet ist, werden folgende Komponenten eingewogen :

a) 4,4'-Diamino-3,3'-dimethyldicyclohexylmethan,

b) eine diesem Diamin äquivalente Menge Isophthalsäure,

c) ein Salz aus Terephthalsäure und einem Diamin der Formel IVa oder IVb, wie unter b) beschrieben.

Nachdem man die Luft im Bombenrohr vollständig durch Stickstoff verdrängt hat, verschliesst man das Bombenrohr und taucht es in ein Salzbad, dessen Temperatur 280 °C beträgt. Nach 30-60 Minuten ist eine homogene, glasklare Schmelze entstanden. Nach insgesamt 3 Stunden wird die Vorkondensation abgebrochen, indem man das Bombenrohr aus dem Salzbad entfernt und den Ueberdruck durch Oeffnen des Ventils ablässt. Das erstarrte glasklare Vorkondensat wird aus dem Bombenrohr entfernt und in ein Kondensationsgefäss übergeführt. Unter strengem Ausschluss von Luft und unter dauerndem Durchleiten von Stickstoff wird die Schmelze bei 280 °C Salzbadtemperatur während 6 Stunden polykondensiert, wobei das Reaktionswasser durch den Stickstoffstrom laufend entfernt wird. Beim Abkühlen erstarrt die Schmelze zu einer glasklaren Masse.

Je 2-3 g der hergestellten Polyamide werden in einer beheizbaren hydraulischen Presse bei 280 °C zu einer Folie von ca. 0,4 bis 1 mm Dicke verpresst. Zur Bestimmung der Wasseraufnahme werden die Folien bei Raumtemperatur einer relativen Luftfeuchtigkeit von 65 % ausgesetzt, bis sich das Gleichgewicht eingestellt hat, das heisst, bis keine Gewichtszunahme mehr festgestellt werden kann. Je nach Foliendicke schwankt die dafür benötigte Zeit zwischen etwa 10 und 60 Tagen.

In Tabelle I sind Zusammensetzung und Eigenschaften der erhaltenen Copolyamide angegeben. Bei der Zusammensetzung wird der Anteil an Salz aus Terephthalsäure und einem Diamin der Formel IVa oder IVb in Gewichtsprozent, bezogen auf das Gesamtgewicht aller Einsatzkomponenten, angegeben. Die Differenz zu 100 Gewichtsprozent besteht aus einem äquimolaren Gemisch aus Isophthalsäure und 4,4'-Diamino-3,3'-dimethyldicyclohexylmethan.

Die reduzierte Viskosität $\eta_{red.} = \eta rel. - 1/c$ basiert auf Messungen einer 0,5 %igen Lösung der Copolyamide in m-Kresol bei 25 °C. Die Glasumwandlungstemperaturen wurden im Differentialkalorimeter (DSC) gemessen. Bei den Werten für die Wasseraufnahme handelt es sich um die Sättigungswerte bei Raumtemperatur.

Die Beständigkeit der Transparentz gegenüber kochendem Wasser ist bei allen Copolyamiden sehr gut, das heisst, auch nach mehreren Tagen ist keine Beeinträchtigung der Transparenz feststellbar.

(Siehe die Tabelle I, Seite 7)

TABELLE 1

| Beispiel Nr. | Salz aus TPS und Diamin d. Formel IVa/IVb | Gew.% | η red. dl/g | Glasumwandlungstemp. °C | Wasseraufnahmes 65% rel. Luftf. Gew.% | Kochwasserbeständigkeit |
|---|---|---|---|---|---|---|
| 1 | Salz E | 50 | 1,02 | 173 | 1,6 | sehr gut |
| 2 | Salz E | 52 | 0,86 | 169 | 1,5 | do. |
| 3 | Salz E | 55 | 0,83 | 165 | 1,4 | do. |
| 4 | Salz E | 60 | 0,96 | 160 | 1,2 | do. |
| 5 | Salz A | 75 | 1,07 | 166 | 1,5 | do. |
| 6 | Salz B | 70 | 0,85 | 163 | 1,4 | do. |
| 7 | Salz B | 80 | 0,98 | 158 | 1,2 | do. |
| 8 | Salz B | 85 | 0,93 | 151 | 1,1 | do. |
| 9 | Salz D | 80 | 1,05 | 163 | 1,2 | do. |
| 10 | Salz D | 74 | 0,83 | 167 | 1,4 | do. |
| 11 | Salz C | 80 | 0,91 | 164 | 1,3 | do. |
| 12 | Salz C | 70 | 1,01 | 178 | 1,6 | do. |
| 13 | Salz F | 80 | 0,80 | 163 | 1,2 | do. |
| 14 | Salz F | 75 | 0,98 | 170 | 1,4 | do. |
| 15 | Salz G | 75 | 0,94 | 166 | 1,4 | do. |
| 16 | Salz G | 78 | 0,82 | 161 | 1,3 | do. |

TPS = Terephthalsäure.

Beispiel 17

In ein Polykondensationsgefäss werden 0,854 g 4,4'-Diamino-3,3'-dimethyldicyclohexylmethan, 2,213 g 1,10-Diamino-1,10-di-(2-butyl)-decan, 1,982 g Terephthalsäurediphenylester und 1,624 g Isophthalsäurediphenylester eingewogen. Umgerechnet in Salzeinheiten, wie sie in Tabelle I verwendet werden, entspricht dies einem Anteil von 71 Gew.% Salz G, wobei in diesem Salz 20 Gew.% Terephthalsäure durch Isophthalsäure ersetzt sind. Das Reaktionsgemisch wird unter Stickstoff in ein auf 220 °C erwärmtes Salzbad eingetaucht. Nachdem eine homogene Schmelze entstanden ist, wird die Temperatur jeweils nach 30 Minuten um 10 °C erhöht, bis 280 °C erreicht sind. Während dieser Zeit ist die Hauptmenge des abgespaltenen Phenols abdestilliert. Um die letzten Phenolreste noch zu entfernen, wird noch eine Stunde lang bei 280 °C Wasserstrahlvakuum angelegt. Beim Abkühlen erstarrt die Schmelze zu einer farblosen Masse. Die reduzierte Viskosität, gemessen als 0,5 %igen Lösung in m-Kresol bei 25 °C beträgt 0,92 dl/g. Die Glasumwandlungstemperatur beträgt 167 °C. Eine ca. 1 mm dicke Folie nimmt bei Raumtemperatur und 65 % relativer Luftfeuchtigkeit 1,6 Gew.% Wasser auf. Die Beständigkeit der Transparenz gegen Kochwasser ist sehr gut.

Beispiel 18

Analog der in Beispiel 17 beschriebenen Arbeitsweise wird ein Copolyamid aus 4,4'-Diamino-3,3'-dimethyldicyclohexylmethan und einer äquivalenten Menge Isophthalsäurediphenylester sowie 1,10-Diamino-1,10-di-(3-heptyl)-decan und einer äquivalenten Menge Terephthalsäurediphenylester hergestellt. Das Verhältnis der Reaktionskomponenten wird so gewählt, dass bei einer Umrechnung auf Salzeinheiten der Anteil Salz aus Terephthalsäurediphenylester und 1,10-Diamino-1,10-di-(3-heptyl)-decan 75 Gew.% beträgt. Die reduzierte Viskosität des erhaltenen Copolyamids, gemessen als 0,5 %ige Lösung in m-Kresol bei 25 °C, beträgt 1,08. Glasumwandlungstemperatur 167 °C. Wasseraufnahme bei 65 % relativer Luftfeuchtigkeit 1,2 Gew.%. Die Beständigkeit der Transparenz gegen Kochwasser ist sehr gut.

Die in den obigen Beispielen verwendeten Diamine der Formeln IVa oder IVb können nach dem in der deutschen Offenlegungsschrift 25 49 403 beschriebenen Verfahren durch katalytische Hydrierung von in 3,12-Stellung entsprechend substituierten 1,2-Diaza-1,5,9-cyclododecatrienen oder 1,2-Diaza-cyclododecanen erhalten werden :

Beispiel 19

In ein Bombenrohr werden folgende Substanzen eingewogen :

a) 2,010 4 g 2,2-Bis-(4-aminocyclohexyl)-propan

b) 1,399 4 g Isophthalsäure
c) 3,491 8 g 1,10-Diamino-1,10-di-n-hexyldecan
d) 1,696 1 g Terephthalsäure

Die Mischung wird unter Stickstoff eingeschmolzen und 3 Stunden auf 300 °C erhitzt.

Nach dem Abkühlen wird die glasklare, erstarrte Masse in ein Kondensationsrohr übergeführt und 5 Stunden lang unter Durchleiten von Stickstoff kondensiert. Die reduzierte Lösungsviskosität, gemessen als 0,5 prozentige Lösung in m-Kresol beträgt 0,71. Das Polyamid hat eine Glasumwandlungstemperatur von 159 °C. Bei 65 % rel. Luftfeuchtigkeit nimmt es maximal 1,1 Gew.-% Wasser auf.

**Ansprüche**

1. Ein transparentes Copolyamid mit einer reduzierten spezifischen Viskosität von mindestens 0,5 dl/g, gemessen an einer 0,5 %igen Lösung in m-Kresol bei 25 °C, das aus wiederkehrenden Strukturelementen der Formel I

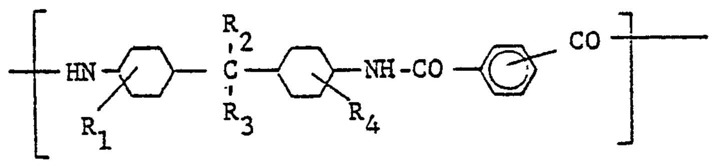

(I)

und II

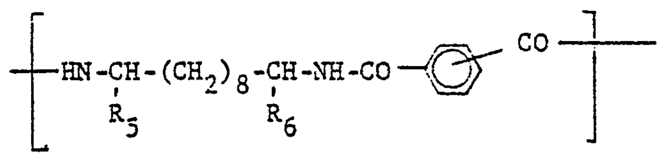

(II)

besteht, worin die Carbonylgruppen in 50-85 % der Summe aller Strukturelemente der Formel I und II in 1,4-Stellung und in 50-15 % der Summe aller Strukturelemente der Formel I und II in 1,3-Stellung an den Benzolkern gebunden sind,

$R_1$ bis $R_4$ unabhängig voneinander Wasserstoff oder Alkyl mit 1-4 C-Atomen,

$R_5$ und $R_6$ unabhängig voneinander Aethyl, n-Propyl, Isobutyl, $—CH(R_7)(R_8)$ oder $—CH_2CH(R_9)(R_{10})$,

$R_7$ Alkyl mit 1-8 C-Atomen,

$R_8$ Alkyl mit 1-4 C-Atomen,

$R_9$ Wasserstoff oder Alkyl mit 1-4 C-Atomen und

$R_{10}$ Alkyl mit 2-8 C-Atomen bedeuten,

wobei, wenn $R_5$ und $R_6$ unabhängig voneinander Aethyl, n-Propyl, Isobutyl oder $—CH(R_7)(R_8)$ darstellen, der Anteil an Strukturelementen der Formel I 10-40 Gew.%, bezogen auf das Gesamtgewicht des Polymeren, beträgt, und, wenn $R_5$ und $R_6$ unabhängig voneinander eine Gruppe $—CH_2CH(R_9)(R_{10})$ bedeuten, der Anteil an Strukturelementen der Formel I 35-55 Gew.%, bezogen auf das Gesamtgewicht des Polymeren, beträgt.

2. Ein transparentes Copolyamid nach Anspruch 1, worin $R_1$ bis $R_4$ unabhängig voneinander Wasserstoff oder Methyl und $R_5$ und $R_6$ je Aethyl, n-Propyl, Isobutyl oder eine Gruppe $—CH(R_7)(R_8)$ bedeuten und $R_7$ und $R_8$ die unter Formel I bzw. II angegebene Bedeutung haben, der Anteil an Strukturelementen der Formel I 15-32 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

3. Ein transparentes Copolyamid nach Anspruch 1, worin $R_1$ bis $R_4$ unabhängig voneinander Wasserstoff oder Methyl und $R_5$ und $R_6$ je eine Gruppe $—CH_2CH(R_9)(R_{10})$ bedeuten und $R_9$ und $R_{10}$ die unter Formel I bzw. II angegebene Bedeutung haben, der Anteil an Strukturelementen der Formel I 38-52 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

4. Ein transparentes Copolyamid nach Anspruch 2, worin $R_1$ und $R_4$ je Methyl, $R_2$ und $R_3$ je Wasserstoff, $R_7$ Alkyl mit 1-5 C-Atomen und $R_8$ Alkyl mit 1-3 C-Atomen bedeuten, der Anteil an Strukturelementen der Formel I 20-30 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

5. Ein transparentes Copolyamid nach Anspruch 3, worin $R_1$ und $R_4$ je Methyl, $R_2$ und $R_3$ je Wasserstoff, $R_9$ Wasserstoff und $R_{10}$ Alkyl mit 4-6 C-Atomen bedeuten, der Anteil an Strukturelementen der Formel I 40-50 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

6. Ein transparentes Copolyamid nach Anspruch 1, das aus wiederkehrenden Strukturelementen der Formel Ia

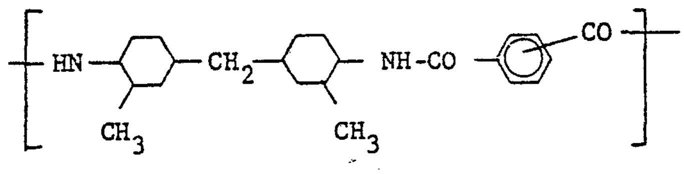

(Ia)

und IIa

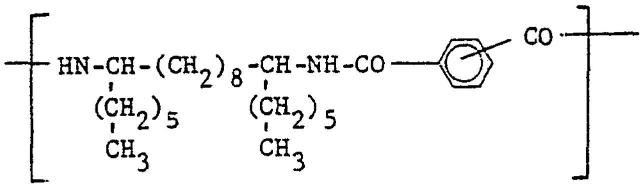

(IIa)

besteht, worin der Anteil an Strukturelementen der Formel Ia 45-50 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

7. Ein transparentes Copolyamid nach Anspruch 1, das aus wiederkehrenden Strukturelementen der Formel Ia

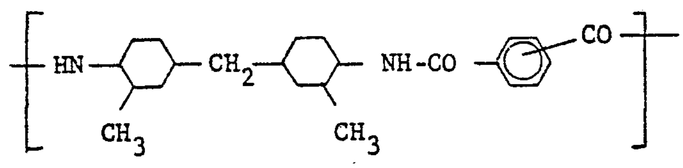

(Ia)

und IIb

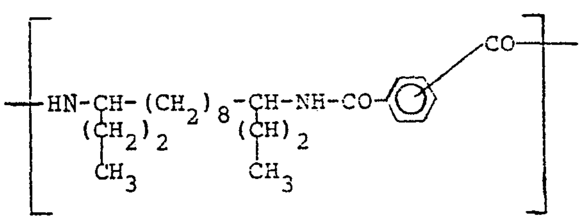

(IIb)

besteht, worin der Anteil an Strukturelementen der Formel Ia 25-30 Gew.%, bezogen auf das Gesamtgewicht des Polymeren, beträgt und der Anteil an Isophthalsäurekomponenten im Polymeren, in Mol.%, im wesentlichen demjenigen der cycloaliphatischen Diaminkomponenten entspricht.

8. Ein Verfahren zur Herstellung eines transparenten Copolyamids nach Anspruch 1, dadurch gekennzeichnet, dass man entweder

A) 10-40 Gew.% eines Gemisches aus im wesentlichen stöchiometrischen Mengen Isophthalsäure oder Terephthalsäure oder Gemischen bzw. amidbildenden Derivaten davon und einem Diamin der Formel III

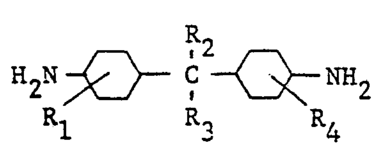

(III)

mit 90-60 Gew.% eines Gemisches aus im wesentlichen stöchiometrischen Mengen Isophthalsäure oder Terephthalsäure oder Gemischen bzw. amidbildenden Derivaten davon und einem Diamin der Formel IVa

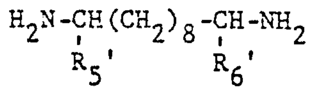 (IVa)

oder

B) 35-55 Gewichtsprozent eines Gemisches aus im wesentlichen stöchiometrischen Mengen Isophthalsäure oder Terephthalsäure oder Gemischen bzw. amidbildenden Derivaten davon und einem Diamin der Formel III mit 65-45 Gew.% eines Gemisches aus im wesentlichen stöchiometrischen Mengen Isophthalsäure oder Terephthalsäure oder Gemischen bzw. amidbildenden Derivaten davon und einem Diamin der Formel IVb

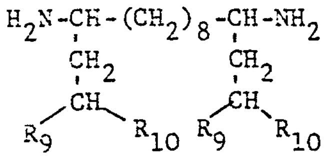 (IVb)

umsetzt, wobei $R_5'$ und $R_6'$ unabhängig voneinander Aethyl, n-Propyl, Isobutyl oder $-CH(R_7)(R_8)$ bedeuten und $R_1$ bis $R_4$ sowie $R_7$ bis $R_{10}$ die unter Formel I bzw. II angegebene Bedeutung haben, der Anteil an Terephthalsäure bzw. einem amidbildenden Derivat davon an der Gesamtmenge der Dicarbonsäuren 50-85 Gew.% und der Anteil an Isophthalsäure bzw. einem amidbildenden Derivat davon an der Gesamtmenge der Dicarbonsäuren 50-15 Gew.% betragen und sich diese Gewichtsprozente bei amidbildenden Derivaten der Terephthalsäure oder Isophthalsäure auf gleiche funktionelle Gruppen beziehen.

9. Ein Verfahren nach Anspruch 8, dadurch gekennzeichnet, dass man ein Copolyamid der in einem der Ansprüche 1-6 genannten Art herstellt.

10. Verwendung eines Copolyamids nach Anspruch 1 zur Herstellung von Formkörpern.

**Claims**

1. A transparent copolyamide which has a reduced specific viscosity of at least 0.5 dl/g, measured on a 0.5 % solution in m-cresol at 25 °C, and which consists of recurring structural elements of the formula I

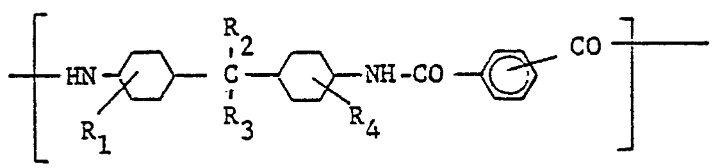 (I)

and II

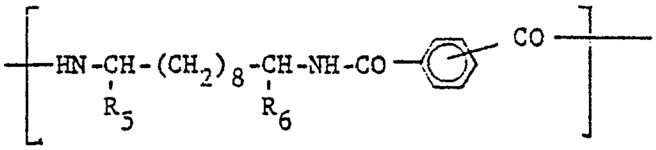 (II)

wherein the carbonyl groups are bound to the benzene nucleus in the 1,4-position in 50-85 % of the sum of all structural elements of the formulae I and II, and in the 1,3-position in 50-15 % of the sum of all structural elements of the formulae I and II,

$R_1$ to $R_4$ independently of one another are each hydrogen or alkyl having 1-4 C atoms,

$R_5$ and $R_6$ independently of one another are each ethyl, n-propyl, isobutyl, $-CH(R_7)(R_8)$ or $-CH_2CH(R_9)(R_{10})$,

$R_7$ is alkyl having 1-8 C atoms,

$R_8$ is alkyl having 1-4 C atoms,

$R_9$ is hydrogen or alkyl having 1-4 C atoms, and

$R_{10}$ is alkyl having 2-8 C atoms,

and if $R_5$ and $R_6$ independently of one another are each ethyl, n-propyl, isobutyl or $-CH(R_7)(R_8)$ the proportion of structural elements of the formula I is 10-40 per cent by weight, relative to the total weight of the polymer, and if $R_5$ and $R_6$ independently of one another are each a group $-CH_2CH(R_9)(R_{10})$ the proportion of structural elements of the formula I is 35-55 per cent by weight, relative to the total weight of the polymer.

2. A transparent copolyamide according to Claim 1, wherein $R_1$ to $R_4$ independently of one another are each hydrogen or methyl, and $R_5$ and $R_6$ are each ethyl, n-propyl, isobutyl or a group $—CH(R_7)(R_8)$, and $R_7$ and $R_8$ have the meanings given under the formulae I and II, and wherein the proportion of structural elements of the formula I is 15-32 per cent by weight, relative to the total weight of the polymer, and the proportion of isophthalic acid components in the polymer, in mol.%, corresponds essentially to that of the cycloaliphatic diamine components.

3. A transparent copolyamide according to Claim 1, wherein $R_1$ to $R_4$ independently of one another are each hydrogen or methyl, and $R_5$ and $R_6$ are each a group $—CH_2CH(R_9)(R_{10})$, and $R_9$ and $R_{10}$ have the meanings given under the formulae I and II, and wherein the proportion of structural elements of the formula I is 38-52 per cent by weight, relative to the total weight of the polymer, and the proportion of isophthalic acid components in the polymer, in mol.%, corresponds essentially to that of the cycloaliphatic diamine components.

4. A transparent copolyamide according to Claim 2, wherein $R_1$ and $R_4$ are each methyl, $R_2$ and $R_3$ are each hydrogen, $R_7$ is alkyl having 1-5 C atoms, and $R_8$ is alkyl having 1-3 C atoms, and wherein the proportion of structural elements of the formula I is 20-30 per cent by weight, relative to the total weight of the polymer, and the proportion of isophthalic acid components in the polymer, in mol.%, corresponds essentially to that of the cycloaliphatic diamine components.

5. A transparent copolyamide according to Claim 3, wherein $R_1$ and $R_4$ are each methyl, $R_2$ and $R_3$ are each hydrogen, $R_9$ is hydrogen, and $R_{10}$ is alkyl having 4-6 C atoms, and wherein the proportion of structural elements of the formula I is 40-50 per cent by weight, relative to the total weight of the polymer, and the proportion of isophthalic acid components in the polymer, in mol.%, corresponds essentially to that of the cycloaliphatic diamine components.

6. A transparent copolyamide according to Claim 1, which consists of recurring structural elements of the formula Ia

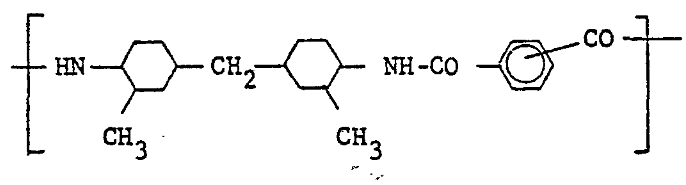

(Ia)

and IIa

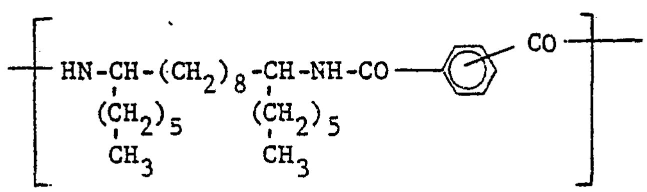

(IIa)

wherein the proportion of structural elements of the formula Ia is 45-50 per cent by weight, relative to the total weight of the polymer, and the proportion of isophthalic acid components in the polymer, in mol.%, corresponds essentially to that of the cycloaliphatic diamine components.

7. A transparent copolyamide according to Claim 1, which consists of recurring structural elements of the formula Ia

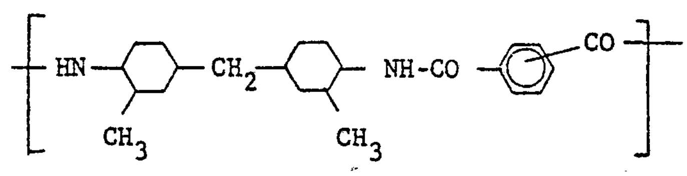

(Ia)

and IIb

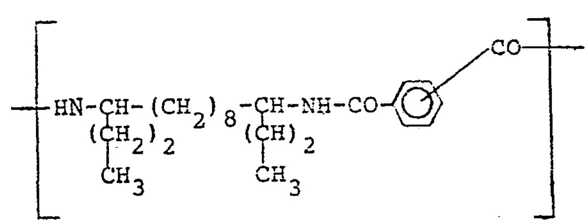

(IIb)

wherein the proportion of structural elements of the formula Ia is 25-30 per cent by weight, relative to the total weight of the polymer, and the proportion of isophthalic acid components in the polymer, in mol.%,

corresponds essentially to that of the cycloaliphatic diamine components.

8. A process for producing a transparent copolyamide according to Claim 1, which process comprises reacting either

A) 10-40 per cent by weight of a mixture of essentially stoichiometric amounts of isophthalic acid or terephthalic acid, or of mixtures or amide-forming derivatives thereof, and a diamine of the formula III

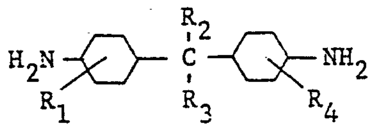

(III)

with 90-60 per cent by weight of a mixture of essentially stoichiometric amounts of isophthalic acid or terephthalic acid, or of mixtures or amide-forming derivatives thereof, and a diamine of the formula IVa

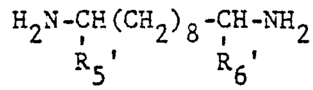

(IVa)

or

B) 35-55 per cent by weight of a mixture of essentially stoichiometric amounts of isophthalic acid or terephthalic acid, or of mixtures or amide-forming derivatives thereof, and a diamine of the formula III with 65-45 per cent by weight of a mixture of essentially stoichiometric amounts of isophthalic acid or terephthalic acid, or of mixtures or amide-forming derivatives thereof, and a diamine of the formula IVb

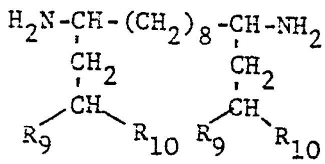

(IVb)

wherein $R_5'$ and $R_6'$ independently of one another are each ethyl, n-propyl, isobutyl or $—CH(R_7)(R_8)$, and $R_1$ to $R_4$ and $R_7$ to $R_{10}$ have the meanings given under the formulae I and II, and wherein the proportion of terephthalic acid or of an amide-forming derivative thereof, with respect to the total amount of dicarboxylic acids, is 50-85 per cent by weight, and the proportion of isophthalic acid, or of an amide-forming derivative thereof, with respect to the total amount of dicarboxylic acids is 50-15 per cent by weight, these weight percentages in the case of amide-forming derivatives of terephthalic acid or isophthalic acid relating to identical functional groups.

9. A process according to Claim 8, wherein there is produced a copolyamide of the type mentioned in any one of Claims 1-6.

10. Use of a copolyamide according to Claim 1 for producing moulded articles.

**Revendications**

1. Copolyamide transparent ayant une viscosité spécifique réduite d'au moins 0,5 dl/g, mesurée à 25 °C sur une solution à 0,5 % dans du m-crésol, qui est constitué de motifs de formule I

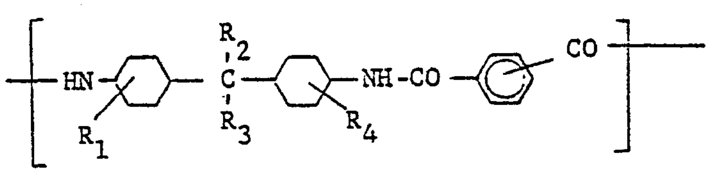

(I)

et de motifs de formule II

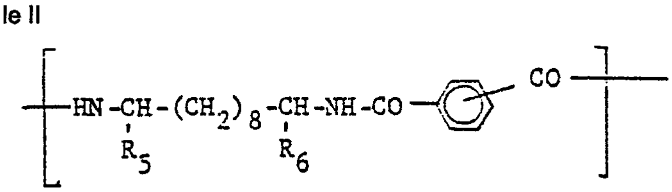

(II)

formules dans lesquelles

$R_1$ à $R_4$ représentent chacun, indépendamment les uns des autres, l'hydrogène ou un alkyle en $C_1$-$C_4$,

$R_5$ et $R_6$ représentent chacun, indépendamment l'un de l'autre, un radical éthyle, n-propyle, isobutyle, $—CH(R_7)(R_8)$ ou $—CH_2CH(R_9)(R_{10})$,
$R_7$ représente un alkyle en $C_1$-$C_8$,
$R_8$ représente un alkyle en $C_1$-$C_4$,
$R_9$ représente l'hydrogène ou un alkyle en $C_1$-$C_4$ et
$R_{10}$ représente un alkyle en $C_2$-$C_8$,
la proportion de motifs de formule I, par rapport au poids total du polymère, représentant de 10 à 40 % en poids lorsque $R_5$ et $R_6$ représentent chacun, indépendamment l'un de l'autre, un radical éthyle, n-propyle, isobutyle ou $—CH(R_7)(R_8)$ et de 35 à 55 % en poids lorsque $R_5$ et $R_6$ représentent chacun, indépendamment l'un de l'autre, un radical $—CH_2CH(R_9)(R_{10})$, et les groupes carbonyles étant fixés, sur le noyau benzénique, en position 1,4 pour 50 à 85 % de la somme de tous les motifs de formules (I) et (II) et en position 1,3 pour 50 à 15 % de la somme de tous les motifs de formules (I) et (II).

2. Copolyamide transparent selon la revendication 1, dans lequel $R_1$ à $R_4$ représentent chacun, indépendamment les uns des autres, l'hydrogène ou un méthyle, $R_5$ et $R_6$ représentent chacun un radical éthyle, n-propyle, isobutyle ou $—CH(R_7)(R_8)$, et $R_7$ et $R_6$ ont les significations qui ont été données à propos des formules I et II, et dans lequel la proportion de motifs de formule I est de 15 à 32 % en poids par rapport au poids total du polymère et la proportion de composantes isophtaliques dans le polymère, en % en moles, est sensiblement égale à celle des composantes diaminées cycloaliphatiques.

3. Copolyamide transparent selon la revendication 1, dans lequel $R_1$ à $R_4$ représentent chacun, indépendamment les uns des autres, l'hydrogène ou un méthyle, $R_5$ et $R_6$ représentent chacun un radical $—CH_2CH(R_9)(R_{10})$, et $R_9$ et $R_{10}$ ont les significations qui ont été données à propos des formules I et II, et dans lequel la proportion de motifs de formule I est de 38 à 52 % en poids par rapport au poids total du polymère et la proportion de composantes isophtaliques dans le polymère, en % en moles, est sensiblement égale à celle des composantes diaminées cycloaliphatiques.

4. Copolyamide transparent selon la revendication 2, dans lequel $R_1$ et $R_4$ représentent chacun un méthyle, $R_2$ et $R_3$ chacun l'hydrogène, $R_7$ représente un alkyle en $C_1$-$C_5$ et $R_8$ un alkyle en $C_1$-$C_3$, et dans lequel la proportion de motifs de formule I est de 20 à 30 % en poids par rapport au poids total du polymère et la proportion de composantes isophtaliques dans le polymère, en % en moles, est sensiblement égale à celle des composantes diaminées cycloaliphatiques.

5. Polyamide transparent selon la revendication 3, dans lequel $R_1$ et $R_4$ représentent chacun un méthyle, $R_2$ et $R_3$ chacun l'hydrogène, $R_9$ représente l'hydrogène et $R_{10}$ un alkyle en $C_4$-$C_6$, et dans lequel la proportion de motifs de formule I est de 40 à 50 % en poids par rapport au poids total du polymère et la proportion de composantes isophtaliques dans le polymère, en % en moles, est sensiblement égale à celle des composantes diaminées cycloaliphatiques.

6. Copolyamide transparent selon la revendication 1, qui est constitué de motifs de formule Ia

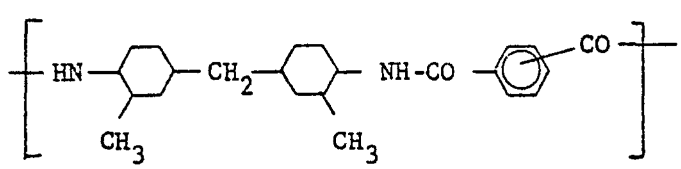
(Ia)

et de motifs de formule IIa

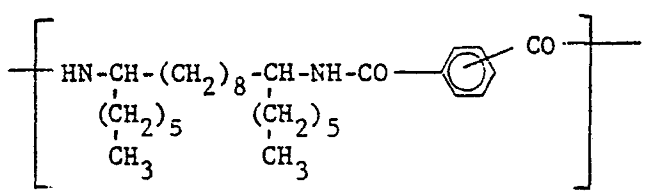
(IIa)

et dans lequel la proportion de motifs Ia est de 45 à 50 % en poids par rapport au poids total du polymère et la proportion de composantes isophtaliques dans le polymère, en % en moles, est sensiblement égale à celle des composantes diaminées cyclo-aliphatiques.

7. Copolyamide transparent selon la revendication 1, qui est constitué de motifs de formule Ia

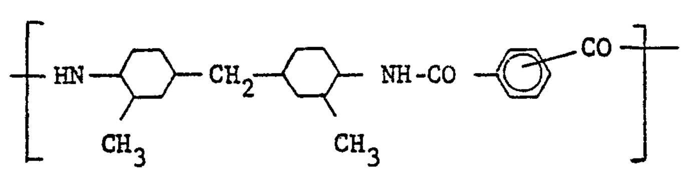
(Ia)

et de motifs de formule IIb

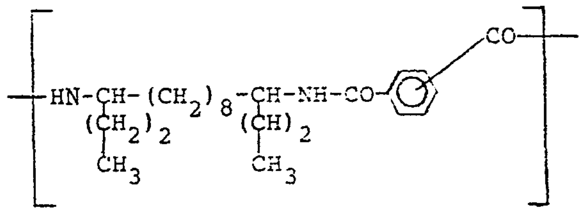

(IIb)

et dans lequel la proportion de motifs de formule Ia est de 25 à 30 % en poids par rapport au poids total du polymère et la proportion de composantes isophtaliques dans le polymère, en % en moles, est sensiblement égale à celle des composantes diaminées cycloaliphatiques.

8. Procédé de préparation d'un copolyamide transparent selon la revendication 1, procédé caractérisé en ce qu'on fait réagir ou bien :

A) de 10 à 40 % en poids d'un mélange constitué de quantités à peu près stœchiométriques d'acide isophtalique ou d'acide téréphtalique ou de mélanges ou de dérivés amidogènes de ceux-ci et d'une diamine de formule III

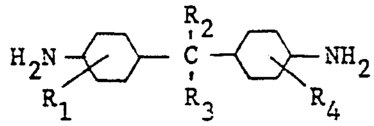

(III)

avec de 90 à 60 % en poids d'un mélange constitué de quantités à peu près stœchiométriques d'acide isophtalique ou d'acide téréphtalique ou de mélanges ou de dérivés amidogènes de ceux-ci et d'une diamine de formule IVa

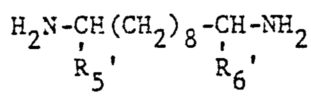

(IVa)

ou bien

B) de 35 à 55 % en poids d'un mélange constitué de quantités à peu près stœchiométriques d'acide isophtalique ou d'acide téréphtalique ou de mélanges ou de dérivés amidogènes de ceux-ci et d'une diamine de formule III, avec de 65 à 45 % en poids d'un mélange constitué de quantités à peu près stœchiométriques d'acide isophtalique ou d'acide téréphtalique ou de mélanges ou de dérivés amidogènes de ceux-ci et d'une diamine de formule IVb

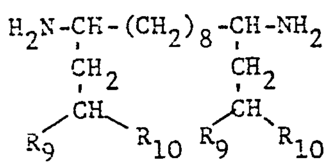

(IVb)

$R_5'$ et $R_6'$ représentant chacun, indépendamment l'un de l'autre, un radical éthyle, n-propyle, isobutyle ou —$CH(R_7)$ $(R_8)$, et $R_1$ à $R_4$ de même que $R_7$ à $R_{10}$ ayant les significations données à propos des formules I et II, la proportion d'acide téréphtalique ou d'un de ses dérivés amidogènes par rapport à la quantité totale des acides dicarboxyliques étant de 50 à 85 % en poids et la proportion de l'acide isophtalique ou d'un de ses dérivés amidogènes par rapport à la quantité totale des acides dicarboxyliques étant de 50 à 15 % en poids, ces pourcentages pondéraux étant relatifs, dans le cas de dérivés amidogènes de l'acide téréphtalique ou de l'acide isophtalique, à des groupes fonctionnels identiques.

9. Procédé selon la revendication 8, caractérisé en ce qu'on prépare un copolyamide du type indiqué dans l'une quelconque des revendications 1 à 6.

10. Application d'un copolyamide selon la revendication 1 pour la fabrication d'objets moulés.